Europäisches Patentamt

European Patent Office

Office européen des brevets

(19)

(11) **EP 1 174 591 A1**

(12) **EUROPÄISCHE PATENTANMELDUNG**

(43) Veröffentlichungstag:
   **23.01.2002 Patentblatt 2002/04**

(51) Int Cl.7: **F01K 23/10**

(21) Anmeldenummer: **00115684.3**

(22) Anmeldetag: **21.07.2000**

(84) Benannte Vertragsstaaten:
   **AT BE CH CY DE DK ES FI FR GB GR IE IT LI LU MC NL PT SE**
   Benannte Erstreckungsstaaten:
   **AL LT LV MK RO SI**

(71) Anmelder: **SIEMENS AKTIENGESELLSCHAFT**
   **80333 München (DE)**

(72) Erfinder:
   • **Bescherer, Helmut, Ing.(grad)**
     **90765 Fürth (DE)**

   • **Diegel, Dieter, Dipl.-Ing.(FH)**
     **91341 Röttenbach (DE)**
   • **Frank, Reinhard, Dipl.-Ing.**
     **91056 Erlangen (DE)**
   • **Gottfried, Peter**
     **91054 Erlangen (DE)**
   • **Henning, Michael, Dipl.-Ing.**
     **91058 Erlangen (DE)**
   • **Zaviska, Oldrich**
     **91058 Erlangen (DE)**

(54) **Verfahren zur Primärregelung mit einer kombinierten Gas- und Dampfturbinenanlage**

(57)   Um ein Verfahren zur Primärregelung so zu verbessern, daß bei der Gas- und Dampfturbinenanlage eine Reserveleistung auch im Dampfturbinenteil vorgesehen ist, die praktisch vollständig für die effektive Frequenzstützung im Sekundenbereich zur Verfügung steht, wird vorgeschlagen, daß die Druckstufe mit einem derart angedrosselten Stellventil (6, 7,8) gefahren wird, daß eine Frequenzstützungs-Leistungsreserve aufgebaut wird, welche bei Unterfrequenz dadurch zur Frequenzstützung genutzt wird, daß nach Maßgabe der Frequenzunterschreitung eine Sollwertkorrektur gebildet wird, die einem gegenüber dem angedrosselten Zustand des Stellventils (6, 7,8) erhöhten Durchlaßquerschnitt entspricht und die mit einem aufgeprägten, zeitlichen Verschwindsignal auf den Durchlaßquerschnitt des Stellventils (6, 7,8) einwirkt, wobei das zeitliche Verschwindsignal derart bemessen ist, daß unter Berücksichtigung des Antwortverhaltens der Gas- und Dampfturbinenanlage auf den erhöhten Durchlaßquerschnitt trotz Sollwertkorrektur ein stabiler Betriebszustand gewahrt bleibt.

FIG 2

EP 1 174 591 A1

**Beschreibung**

Die Erfindung betrifft ein Verfahren zur Primärregelung mit einer kombinierten Gas- und Dampfturbinenanlage nach dem Oberbegriff des Anspruchs 1.

Die Gas- und Dampfturbinenanlage hat ein Gasturbinenteil und ein Dampfturbinenteil mit zumindest einer Druckstufe. Der Arbeitsdampf des Dampfturbinenteils wird durch einen oder mehrere mit der Abwärme des Gasturbinenteils gespeisten Abhitzekessel erzeugt. Die Druckstufe hat mindestens ein Dampfturbinen-Stellventil. Der Stellventil-Durchlaßquerschnitt wird dabei durch eine Regelung eingestellt, deren Sollwertbildung unter Verwendung eines leistungsrelevanten Regelparameters der Druckstufe erfolgt. Leistungsrelevanter Regelparameter bedeutet, daß die Regelung eine Regelung der Leistung der Druckstufe erlaubt. Dabei kann der leistungsrelevante Regelparameter auch die Leistung der Druckstufe selber sein. Hierauf wird später noch näher eingegangen.

Eine Abweichung der momentanen Netzfrequenz von einer Netz-Sollfrequenz wird in einer Frequenzregelung ermittelt und es wird im Sinne einer Kompensation entgegengesteuert.

Netzbetreiber müssen grundlegende Eigenschaften des Netzbetriebes garantieren. Hierzu gehört insbesondere auch eine bestimmte, zeitliche und bezüglich der angeforderten elektrischen Leistung stabile Stromfrequenz (Europa: 50 Hz). Abweichungen hiervon werden nur in bestimmten engen Grenzen toleriert. Die Frequenzstabilität wird im Netz durch einen dynamischen Last-/Leistungsausgleich sichergestellt. Hierzu muß innerhalb von Sekunden beträchtliche Reserveleistung zur Verfügung stehen. Diese Reserveleistung müssen die Netzbetreiber als Dienstleistung einkaufen.

Bei kombinierten Gas- und Dampfturbinenanlagen wird diese Reserveleistung bisher von der Gasturbinenteilanlage bereitgestellt. Kombinierte Gas- und Dampfturbinenanlagen sind Anlagen, in denen den Gasturbinen Abhitzekessel zum Betrieb einer Dampfturbinenanlage nachgeschaltet sind. Im allgemeinen wird dabei die Abgastemperatur der Gasturbinen über einen großen Leistungsbereich konstant gehalten. Bei einem derartigen Betrieb sind jedoch der Veränderung der Gasturbinenleistung Grenzen gesetzt. Begrenzt wird die Lastwechselfähigkeit im wesentlichen von der Dynamik der Abgastemperaturregelung und damit der Änderbarkeit des Luftmassenstroms der Gasturbine. Der Dampfturbinenteil der Anlage folgt den Leistungsänderungen der Gasturbinen im allgemeinen mit dem erheblich trägeren Zeitverhalten des Abhitzeprozesses. Bei kombinierten Gas- und Dampfturbinenalagen im Frequenzregelbetrieb wird also heute die vom Netz geforderte Leistungsänderung allein mit dem Gasturbinenteil der Anlagen erbracht, da der Dampfturbinenteil in den ersten Sekunden nichts dazu beiträgt. Der Wasser/Dampfkreis d. h. die Dampferzeugung und die Dampfturbine, ist nur ein passives Teil der gesamten Gas- und Dampfturbinenanlage, welches lediglich die Funktion eines Abwärmeverwerters erfüllt.

Demzufolge muß die Gasturbine die gesamte Reserveleistung bei der Primärregelung alleine erbringen. Deshalb sind beim Betrieb der Anlage die Frequenzregelreserven bei der Gasturbine alleine einzukalkulieren und die stationär gefahrene Blockleistung ist dann um einen entsprechend höheren Anteil reduziert.

Es ist Aufgabe der vorliegenden Erfindung, ein Verfahren der eingangs genannten Art anzugeben, das es erlaubt, bei der Gas- und Dampfturbinenanlage eine Reserveleistung auch im Dampfturbinenteil vorzusehen, die praktisch vollständig für die effektive Frequenzstützung im Sekundenbereich zur Verfügung steht.

Die Erfindung bietet den Vorteil, daß im Sekundenbereich praktisch die gesamte Reserveleistung, die sowohl für den Gas- als auch für den Dampfteil vorgesehen ist, bereitgestellt werden kann. Insbesondere ist die auf den Dampfteil entfallende Reserveleistung erfindungsgemäß im Sekundenbereich bereitstellbar. Die im Stand der Technik genannte Verzögerung der Reaktion des Dampfturbinenteils entfällt somit. Die Anlagen können damit die Reserveleistung bei höherer Blockleistung vorhalten und die Entbindung der Regelreserve im Sekundenbereich wird durch den Beitrag der Dampfturbine dynamisch verbessert. Die Betreiber der kombinierten Gas- und Dampfturbinenanlagen erzielen somit neben den Erlösen durch Teilnahme an der Frequenzregelung auch Mehreinnahmen aus der Stromerzeugung mit höherer Blockleistung.

Dieser Vorteil wird dadurch erreicht, daß für den Dampfteil eine Frequenzstützungs-Leistungsreserve im Kesselspeicher aufgebaut wird. Dazu wird die Druckstufe mit einem angedrosselten Stellventil gefahren. Durch die Androsselung baut sich vor dem Stellventil ein Staudruck auf, bis ein Gleichgewichtszustand erreicht ist zwischen dem herrschenden Druck und dem Massenstrom. Die Frequenzstützungs-Leistungsreserve wird bei Unterfrequenz dadurch zur Frequenzstützung genutzt, daß nach Maßgabe der Frequenzunterschreitung eine Sollwertkorrektur gebildet wird. Die Sollwertkorrektur bezieht sich auf den Sollwert des Regelparameters, der in der betreffenden Gas- und Dampfturbinenanlage zur Soll-Ist-Regelung verwendet wird. Dies bedeutet, daß in Abhängigkeit des Betrages, um den die aktuelle Frequenz die Sollfrequenz unterschreitet eine Sollwertkorrektur gebildet wird, die der Frequenzabweichung entgegenwirkt.

Die Sollwertkorrektur entspricht daher einem gegenüber dem angedrosselten Zustand des Stellventils erhöhten Durchlaßquerschnitt. Sie wirkt mit einem aufgeprägten, zeitlichen Verschwindsignal auf den Durchlaßquerschnitt des betreffenden Stellventils ein. Dadurch wird der betreffende Durchlaßquerschnitt um ein der Sollwertkorrektur gemäß dem zeitlichen Verlauf des aufgeprägten Verschwindsignal entsprechendes Maß erhöht, d. h. die Androsselung insoweit aufgehoben. Demzufolge wird die aufgespeicherte Frequenzstützungs-Leistungsreserve (zumindest teilweise) bei Unterfrequenz zur Frequenzstützung freigesetzt.

Die Androsselung und die Aufhebung der Androsselung wird somit über die Ventilstellung bewirkt. Dabei bedeutet Androsselung, daß der Durchlaßquerschnitt des Stellventils verengt wird und durch Druckanstieg vor dem Ventil der gleiche Massenstrom wie vor der Androsselung beim voll geöffneten Ventil weiter fließt.

Dabei dient das zeitliche Verschwindsignal dazu, die erwähnte Aufhebung der Androsselung in ihrer Zeitdauer und in ihrer Höhe zu begrenzen. Es entspricht einer temporären Verstärkung der Sollwertkorrektur. Das zeitliche Verschwindsignal startet mit einem endlichen Wert und fällt nach einer vorbestimmten Zeit auf Null ab. Dabei kann das Verschwindsignal beispielsweise mit der Sollwertkorrektur multipliziert sein, so daß das Ergebnis (z.B. über einen Öffnungsregler) auf das betreffende Stellventil einwirkt. Vorzugsweise fällt demnach das sich ergebende Gesamtsignal, welches dem Maß der Aufhebung der obengenannten Androsselung entspricht, nach der vorbestimmten Zeitdauer auf Null ab, so daß dann der Zustand ohne Sollwertkorrektur wiederhergestellt ist.

Das zeitliche Verschwindsignal ist nach seiner Stärke, seinem Verlauf und seiner Zeitdauer derart bemessen, daß unter Berücksichtigung des Antwortverhaltens der Gas- und Dampfturbinenanlage auf den erhöhten Durchlaßquerschnitt unter der Sollwertkorrektur ein stabiler Betriebszustand gewahrt wird. Damit wird dem Umstand Rechnung getragen, daß der Durchlaßquerschnitt des Stellventils nur so weit und nur so lange erhöht werden kann, daß der Druck nicht zu stark abfällt. Hierauf wird später noch näher eingegangen.

Die Beteiligung des Dampfteils an der Frequenzstützung ist erstmals durch die Erfindung möglich, wodurch die obengenannten Vorteile erreicht werden können. Damit wird es zugleich mit der Erfindung erstmals möglich, daß sich eine Gas- und Dampfturbinenanlage an der Frequenzregelung sowohl mit dem Gasturbinenteil als auch mit dem Dampfturbinenteil wirtschaftlicher beteiligen kann. Hierbei wird der Gasturbinenteil bei Unterfrequenz durch den Dampfturbinenteil entlastet und muß in den ersten Sekunden nicht mehr die gesamte zur Frequenzstützung erforderliche Leistungsreserve alleine aufbringen.

Das erfindungsgemäße Verfahren bietet für Gas- und Dampfturbinenanlagen des weiteren den Vorteil, daß die im Falle einer Unterfrequenz zur Frequenzstützung nötige Mehrleistung nicht erst durch Leistungseintrag im Augenblick der Anforderung eingebracht wird, sondern bereits vorher durch eine vorübergehend geringfügig erhöhte Leistung des Gasturbinenteils. Der erforderliche, vorübergehend geringfügig erhöhte Leistungsanteil für den Aufbau der Dampfspeicherreserve geht aber nicht verloren, sondern wird gerade bei der Frequenzstützung durch Ausspeicherung des Dampfspeichers wieder genutzt. Die während des Aufbaus der Dampfspeicherreserve vorübergehend geringere Dampfturbinenleistung kann über eine blockübergreifende Leistungsführung durch die Gasturbinenleistung problemlos ausgeglichen werden, so daß darüber den Leistungsanforderungen an den Block in seiner Summe stets entsprochen werden kann.

Bevorzugte Ausgestaltungen der vorliegenden Erfindung sind in den Unteransprüchen beschrieben.

Es wird vorgeschlagen, daß der leistungsrelevante Regelparameter der im Bereich des Stellventils herrschende Vordruck ist, welcher ermittelt wird durch Messung des Dampfdurchsatzes und Umrechnung mit Hilfe einer für die Druckstufe charakteristischen, modifizierten Gleitdruckkennlinie, die einem angedrosselten Stellventil entspricht. Die Ventilstellung wird also aus der modifizierten Gleitdruckkennlinie ermittelt. Dabei wird ein Drucksollwert berechnet, der den einzustellenden Druckwert innerhalb der Druckstufe repräsentiert. Der Zusammenhang zwischen dem momentanen Dampfdurchsatz und dem Druck wird durch die für die Druckstufe charakteristische, modifizierte Gleitdruckkennlinie gegeben. Dabei ist die modifizierte Gleitdruckkennlinie bezogen auf einen gegenüber dem voll geöffneten Stellventil (natürliche Gleitdruckkennlinie) verringerten Durchlaßquerschnitt.

Im modifizierten Gleitdruckbetriebspunkt ist in diesem Sinne eine Leistungsreserve in der Druckstufe verfügbar. Diese Leistungsreserve kann bei Unterfrequenz erfindungsgemäß durch eine geregelte Erweiterung des Durchlaßquerschnittes des Stellventils zur Frequenzstützung genutzt werden.

Das zeitliche Verschwindsignal ist ein mit einer Zeitkonstante abklingendes Abklingsignal. Bei einer Abkling-Zeikonstante = 0 kann das Verschwindsignal auch ein Rechtecksignal sein. Bevorzugt wird aber ein Verschwindsignal, bei dem die Zeitkonstante und/oder die Signalform des Abklingsignals ein Modell der zeitlichen Impulsantwort der kombinierten Gas- und Dampfturbinenanlage ist. Die Zeitkonstante gibt dabei die Geschwindigkeit der Abnahme des Abklingsignals an. Näherungsweise ist das Abklingsignal nach ca. 3 bis 6 Zeitkonstanten ausreichend bzw. vollständig abgeklungen. In dem Abklingsignal sind die wesentlichen Parameter der Gas- und Dampfturbinenanlage berücksichtigt; damit entspricht das Abklingsignal dem Verhalten des Dampfteils bei Aufhebung der Androsselung unter Berücksichtigung des Gasteils und insbesondere der Dampferzeugung des Dampfteils.

Bevorzugt entspricht das zeitliche Verschwindsignal einer $D-T_n$-Modellfunktion der kombinierten Gas- und Dampfturbinenanlage. Dabei steht n für 1, 2 oder mehr. Es handelt sich um ein verzögertes Differenzierverhalten, das dem realen Verhalten angepaßt ist und im Idealfall das reale Verhalten widerspiegelt. Die $D-T_1$-Funktion hat einen sprunghaften Anstieg und darauffolgend einen mit der Zeitkonstante abnehmen-

den Verlauf. Die D-T$_2$-Funktion hat demgegenüber keinen sprunghaften Anstieg, sondern einen kontinuierlichen Anstieg, der ebenfalls eine Zeitkonstante aufweist. Die Zeitkonstante des ansteigenden Zweiges ist aber wesentlich kleiner als die des abnehmenden Zweiges.

Die D-T$_n$-Funktion kann durch folgenden Zusammenhang mathematisch dargestellt werden:

$$D\text{-}Tn = T_D \frac{s}{(1 + sT_1)(1 + sT_2)...}$$

Dabei sind

$T_D$ eine geeignete Vorhaltzeitkonstante,
s der entsprechende Laplace-Operator und
$T_n$ die entsprechenden Zeitkonstanten,

die jeweils für die betreffende Anlage charakteristisch sind. Auf diese Weise kann eine geeignete Modellfunktion abgeleitet werden.

Die Verwendung der D-T$_n$-Funktion gewährleistet, daß die Sollwertkorrektur mit einem für die Gas- und Dampfturbinenanlage charakteristischen Zeitverhalten auf den Durchlaßquerschnitt des Stellventils einwirkt.

Abhängig von der Speicherfähigkeit des Dampfteiles der Anlage sind die Zeitkonstanten auszuwählen. Für die meisten Anlagen betragen die Zeitkonstanten zwischen 10 und 200 Sekunden.

Bevorzugt erfolgt eine für die kombinierte Gas- und Dampfturbinenanlage gemeinsame Blockleistungsführung. Ist eine solche vorgesehen, so wird vorgeschlagen, daß die Sollwertkorrektur, insbesondere mit aufgeprägtem, zeitlichen Verschwindsignal, zusätzlich in einer Stoppschaltung der Blockleistungsführung verarbeitet wird, wobei die Stoppschaltung eine Korrektur der Blockleistung über die Blockleistungsführung stoppt, die einer Leistungsänderung der Druckstufe/des Dampfturbinenteils aufgrund der Sollwertkorrektur, insbesondere mit aufgeprägtem, zeitlichen Verschwindsignal, entgegenwirken würde. Die Sollwertkorrektur wird demzufolge in die Stoppschaltung der Blockleistungsführung eingespeist.

Dies bedeutet, daß bei Erhöhung des Durchlaßquerschnittes des Stellventils aufgrund der Sollwertkorrektur, insbesondere mit aufgeprägtem, zeitlichen Verschwindsignal, in der Blockleistungsführung zunächst eine Erhöhung der Blockleistung registriert werden würde, woraufhin die Blockleistungsführung der ansteigenden Blockleistung entgegenwirken würde. In diesem Fall ist aber die Erhöhung der Blockleistung aufgrund der Sollwertkorrektur gewünscht, so daß die Gegenwirkung zur Blockleistungserhöhung - das ist die obengenannte Korrektur der Blockleistung - in diesem Fall gestoppt werden muß.

Dies gilt auch für den entgegengesetzten Fall, nämlich daß der Durchlaßquerschnitt des Stellventils wieder verringert wird. Eine Verringerung des Durchlaßquerschnittes kommt beispielsweise aufgrund zu hoher Netzfrequenz in Betracht. Dann würde die Blockleistungsführung - entsprechend dem oben genannten Fall - eine Verringerung der Blockleistung registrieren und dieser entgegenwirken wollen. In diesem Fall muß die Erhöhung - das ist die obengenannte Korrektur der Blockleistung - wiederum gestoppt werden. Mit der genannten Stoppschaltung funktioniert die Erfindung effektiver, da eine Gegenreaktion der Blockleistungsführung zur Wirkung der Sollwertkorrektur - insbesondere mit aufgeprägtem, zeitlichen Verschwindsignal - verhindert wird.

Eine Gegensteuerung der Sollwertführung für den modifizierten Gleitdruck, die eventuellen Einspeichervorgängen oder Ausspeichervorgängen ebenfalls entgegenwirken würde, wird dadurch vermieden, daß eine Bestimmung des Druckverlaufs und des Dampfdurchsatzverlaufs in der Druckstufe erfolgt und bei Gegenläufigkeit der vorgenannten Größen die jeweils der Tendenz des Regelparameters entgegenwirkende Richtung der Sollwertänderung gestoppt wird. Ein Einspeichervorgang liegt bei Androsselung des Stellventils vor, wenn die Leistungsreserve aufgebaut wird. Ein Ausspeichervorgang liegt vor, wenn die Androsselung aufgehoben und die eingespeicherte Leistungsreserve - zumindest teilweise - zur Frequenzstützung freigesetzt wird. Dabei verringert sich der Druck in der Druckstufe aufgrund der Erhöhung des Durchlaßquerschnittes, wobei gleichzeitig der Dampfdurchsatz ansteigt. In diesem Fall verhalten sich die beiden Größen also gegenläufig. Dann wird die Erhöhung des Drucksollwertes, der in diesem Falle entgegenwirken würde, gestoppt.

Die Erfindung wird anhand von in den Figuren dargestellten Ausführungsbeispielen näher erläutert. Es zeigen:

Fig. 1    ein schematisches Blockdiagramm einer Gas- und Dampfturbinenanlage,

Fig. 2    ein schematisches Blockschaltbild einer Regeleinrichtung zur Durchführung des erfindungsgemäßen Verfahrens

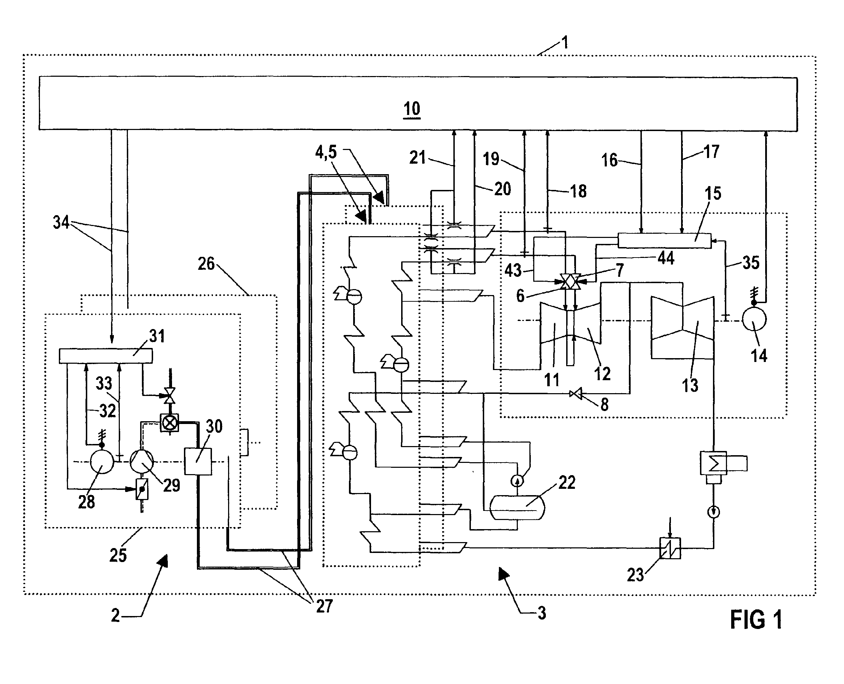

In dem schematischen Blockdiagramm der Fig. 1 ist eine Gas- und Dampfturbinenanlage 1 gezeigt in Ausführung mit 2 Gasturbinen mit je einem nachgeschalteten Dreidruckabhitzekessel und 1 Dampfturbine. Die Gas-und Dampfturbinenanlage 1 hat ein Gasturbinenteil 2 und ein Dampfteil 3. Es ist eine übergeordnete Blockführung 10 vorgesehen, die die koordinierte Steuerung und Regelung der gesamten Gas- und Dampfturbinenanlage 1 erlaubt. Der Gasturbinenteil 2 umfaßt zwei Gasturbosätze 25,26. Jeder Gasturbinensatz 25,26 weist einen Verdichter 29, ein Turbinenteil 30 und einen Generator 28 auf. Zur Regelung des Gasturbosatzes 25 ist eine Gasturbinenregelung 31 vorgesehen. Ihre Leistungs-Sollwerte 34 erhalten die Gasturbosätze 25,26 von der Blockführung 10. In die Gasturbinenregelung 31 werden ein Gasturbinenleistungs-Istwert 32 und ein Gasturbinendrehzahl-Istwert 33 eingespeist. Die Gasturbinendrehzahl wird als Istwert für die Frequenzregelung des Gasturbosatzes verwendet. Der zweite Gasturbosatz 26 ist entsprechend aufgebaut.

Die Abwärme der beiden Gasturbosätze 25,26 wird jeweils über einen Abgaskanal 27 an den jeweils nachgeschalteten Abhitzekessel 4,5 des Dampfteils 3 in der Gas- und Dampfturbinenanlage 1 geleitet. In jeder Druckstufe der Abhitzekessel (es sind drei Druckstufen dargestellt) wird über die zugeführte Abwärme Dampf erzeugt, der in einer nachgeschalteten Dampfturbine 11,12,13 zur Stromerzeugung genutzt wird. In jeder Druckstufe sind Stellorgane (Stellventile oder Stellklappen) 6, 7,8 am Dampfturbineneintritt vorhanden für die Beeinflussung des Dampfdurchsatzes durch die Dampfturbine, welcher letztlich die Dampfturbinenleistung bestimmt.

Zur Ermittlung der momentanen Netzfrequenz wird für die Dampfturbinenregelung 15 der Istwert der Dampfturbinendrehzahl 35 abgegriffen. Dort wird aufgrund des gemessenen Dampfturbinendrehzahl-Istwertes 35 eine Abweichung der momentanen Frequenz von einer Netz-Sollfrequenz ermittelt. Die Regelung 15 der Dampfturbine wirkt einer solchen Abweichung im Sinne einer Kompensation dynamisch, d.h. vorübergehend, entgegen. Dazu werden die Stellventile der einzelnen Druckstufen nach Maßgabe von Stellsignalen betätigt, die von der Frequenzabweichung abhängig sind. Im gezeigten Ausführungsbeispiel ist jeweils ein Frischdampfstellventil 6 für eine Hochdruckstufe und ein Mitteldruckstellventil 7 für eine Mitteldruckstufe vorhanden. Bei Überfrequenz wird durch Androsselung der Stellventile Dampf vorübergehend in das Dampfsystem eingespeichert, bei Unterfrequenz vorübergehend ausgespeichert. Entsprechend ergibt sich vorübergehend eine Leistungsminderung oder -erhöhung an der Dampfturbine.

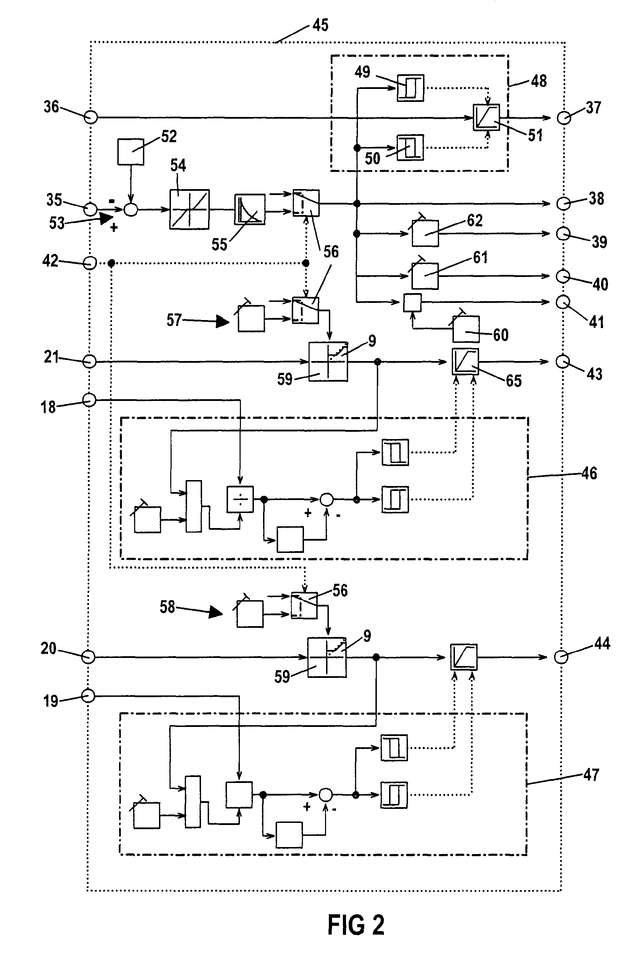

Um bei Unterfrequenz überhaupt mit Ausspeicherung reagieren zu können, muß vorher eine Dampfspeicherreserve aufgebaut werden. Dies wird erreicht durch die Anhebung der Dampfdrücke mittels der Dampfturbinenventile in den einzelnen Druckstufen nach Vorgabe von modifizierten Gleitdruckkennlinien 9. Nach einer gewissen Zeitdauer der Androsselung der Stellventile 6, 7 ist ein modifizierter Gleitdruckbetriebspunkt erreicht, in welchem die Dampfspeicherreserve verfügbar ist. Die modifizierten Gleitdruckkennlinien 9 werden je Druckstufe als Funktion des Dampfmassenstroms zur Dampfturbine vorgegeben. Über eine spezielle, geeignete Erkennungsschaltung 46,47 wird ihr Wert während der zur Frequenzstützung genutzten Ausspeicherung vorübergehend gestoppt, damit über die Gleitdruckkennlinie dem Ausspeichervorgang nicht entgegengewirkt wird (hierauf wird später noch näher eingegangen, siehe Fig. 2).

Neben der Hochdruckteilturbine 11 und der Mitteldruckteilturbine 12 ist noch eine Niederdruckteilturbine 13 vorhanden (Fig. 1), welcher zusätzlich zu dem Abdampf aus der Mitteldruckteilturbine noch Dampf aus der Niederdruckstufe des Abhitzedampferzeugers zugeführt wird über eine Niederdruckstellklappe 8. Die Nutzung der Niederdruckstellklappe zur Frequenzstützung ist im vorliegenden Ausführungsbeispiel nicht gezeigt. Erfindungsgemäß kann aber auch die Niederdruckstellklappe 8 der Niederdruckteilturbine 13 für die Frequenzstützung benutzt werden.

Zur Bestimmung der modifizierten Gleitdruckkennlinie wird der Dampfmassenstrom 21, 20 der zugehörigen Druckstufe erfaßt und zur Ermittlung der Drucksollwerte je Druckstufe der Blockführung 10 zugeleitet. Ferner wird der vor dem jeweiligen Stellventil 6, 7 vorhandene Druck-Istwert 18, 19 abgegriffen und ebenfalls der Blockführung 10 zugeleitet. Mit den genannten, im Dampfkreislauf gemessenen Parametern kann die erfindungsgemäße Regelung erfolgen. Dazu wird der gemäß der Regelung ermittelte Hochdrucksollwert 16 bzw. der Mitteldrucksollwert 17 von der Blockführung 10 (wo die genannten Werte abgegriffen und die Regelparameter berechnet werden können) der Dampfturbinenregelung 15 zugeführt und dort zur Regelung der Dampfturbinenleistung verwendet.

Fig. 2 zeigt ein schematisches Blockschaltbild einer Regeleinrichtung zur Durchführung des erfindungsgemäßen Verfahrens. Diese ist eine Regeleinrichtung für Primärregelung 45, die aus jeweils einer Schaltung zur Nutzung der Hochdruckstufe und der Mitteldruckstufe der Dampfturbine einer kombinierten Gas- und Dampfturbinenanlage besteht. Damit bezieht sich das Blockschaltbild der Fig. 2 auf eine Regeleinrichtung zur Regelung einer Gas- und Dampfturbinenanlage gemäß Fig. 1, wo ebenfalls lediglich eine Androsselung bzw. Erweiterung der Durchlaßquerschnitte der Stellventile 6 und 7 der Hochdruckstufe und der Mitteldruckstufe vorgesehen sind. Die Schaltung kann in entsprechender, geeigneter Weise auch um die Nutzung der Stellklappe 8 der Niederdruckstufe erweitert werden.

In dem gezeigten Ausführungsbeispiel wird der Stellventil-Durchlaßquerschnitt durch eine Regelung des Vordruckes bestimmt, wobei der Sollwert über eine modifizierte Gleitdruckkennlinie vorgegeben wird. Der Vordruck ist somit der leistungsrelevante Regelparameter im Sinne des Anspruchs 1. Hierfür könnte auch direkt die Leistung der Druckstufe verwendet werden, sofern diese ermittelt wird. Vorliegend wird die Leistung in Druck umgerechnet.

Es kann ein Ein/Aus-Signal 42 vorgegeben werden, welches den erfindungsgemäßen Frequenzeinfluß einschaltet bzw. ausschaltet. Der Frequenzeinfluß wird beispielsweise ausgeschaltet, wenn die erfindungsgemäße Beteiligung der Dampfturbine an der Frequenzstützung nicht gewünscht wird. Dann wären die Schalter 56 in Aus-Stellung. Befinden sich die Schalter 56 in Ein-Stellung, ist die erfindungsgemäße Frequenzstützung aktiviert.

Der Hochdruckdurchfluß-Istwert 21 wird gemessen und in der Bewertungsschaltung 59 mittels der Gleitdruckkennlinie 9 in einen Sollwert umgerechnet. Die Hochdruckandrosselung 57 gibt das Maß der Androsselung des Stellventils 6 vor. Dieses wird dadurch berechnet, daß ein zusätzlicher Drucksollwertanteil vorgegeben wird, der unter Verwendung der Gleitdruckkennlinie 9 in dieser einen entsprechend modifizierten Gleitdruck als Sollwert ergibt. Der Drucksollwert wird daraufhin in die Sollwertführung 65 eingespeist und daraufhin an die Dampfturbinenregelung 43 (für das Hochdruckteil) weitergeleitet. Dort wird der Sollwert über eine Regelungsfunktion in einen Stellwert für das entsprechende Stellventil umgerechnet und wirkt dann auf das Stellventil ein.

Der Dampfturbinendrehzahl-Istwert 35 wird ständig abgegriffen und mit dem Frequenzsollwert 52 verglichen 53 (nachdem die Drehzahl in die entsprechende Frequenz umgerechnet wurde). Dabei wird die Frequenzabweichung mit einer vorgegebenen Statik 54 bewertet, die die Charakteristik der Drucksollwertkorrektur in Abhängigkeit von der vorliegenden Frequenzabweichung vorgibt. Dabei kann die Statik 54 ein vorgegebenes Totband haben; wenn die Frequenzabweichung innerhalb des Totbandes liegt, ist die Drucksollwertkorrektur gleich Null. Die Drucksollwertkorrektur bekommt in dem dynamischen Block 55 ein zeitliches Verschwindsignal aufgeprägt.

Wenn der Schalter 56 in Ein-Stellung ist, wird die solchermaßen ermittelte Drucksollwertkorrektur über den Ausgang 38, an dem die durch das zeitliche Verschwindsignal dynamisch bewertete Drucksollwertkorrektur anliegt, an den der Druckstufe entsprechenden Druckregler weitergeleitet. Damit kann in diesem Druckregler die Abweichung aufgrund der Sollwertkorrektur berücksichtigt werden. Dies führt dazu, daß der Druckregler durch Anlegen der Sollwertkorrektur "ruhig" bleibt und der Istwertänderung nicht entgegenwirkt. Gleichzeitig wird die Drucksollwertkorrektur mit dem aufgeprägten, zeitlichen Verschwindsignal - durch einen Bewertungsfaktor 62 bewertet, der die Drucksollwertkorrektur in die entsprechende Ventilstellung umrechnet - über den Ausgang 39 an den Druckreglerausgang vom Hochdruckteil der Dampfturbine weitergegeben. Dadurch wird die entsprechende Einstellung des Stellwertes des Stellventils bewirkt.

Die dynamisch bewertete Drucksollwertkorrektur liegt- durch den Bewertungsfaktor 61 bewertet, der die Drucksollwertkorrektur in die entsprechende Ventilstellung umrechnet - entsprechend an dem Mitteldruckreglerausgang 40 an. Auch für die Mitteldruckstufe erfolgt eine Korrektur der Regelabweichung dadurch, daß die dynamisch und stationär bewertete Drucksollwertkorrektur 41 an dem Druckregler anliegt und somit ebenfalls den Druckregler für die Mitteldruckstufe "ruhig" hält.

Des weiteren ist eine Stoppschaltung 48 für die Blockleistungsführung vorgesehen, in welchem die Sollwertkorrektur mit dem aufgeprägten, zeitlichen Verschwindsignal verarbeitet wird. Diejenige Korrektur der Blockleistung wird dort gestoppt, die der Leistungsänderung der Druckstufe/des Dampfturbinenteils aufgrund der Sollwertkorrektur mit dem aufgeprägten, zeitlichen Verschwindsignal entgegenwirkt. Dies ist durch die Binärsignale Stopp "höher" 49 und Stopp "tiefer" 50 repräsentiert. Die entsprechenden Stoppsignale wirken auf die Sollwertführung 51 der Blockleistungsführung ein, die gemäß dem Blockleistungssollwert 36 einen Leistungssollwert für die Gasturbine(n) an dem Reglerausgang 37 zur Regelung der Leistung ausgibt.

Anhand des Hochdruck-Istwertes 18 erfolgt in einer Hochdruck-Erkennungsschaltung 46 die Erkennung der Gegenläufigkeit des Hochdruck-Istwertverlaufs und des Massenstrom-Istwertverlaufs in der Druckstufe. Bei Gegenläufigkeit der vorgenannten Größen wird die jeweils der Tendenz des Hochdruck-Istwertes entgegenwirkende Richtung der Sollwertänderung gestoppt. Dazu erfolgt im einzelnen eine Quotientenbildung dieser Größen, woraufhin erkannt werden kann, ob die Größen sich gegenläufig entwickeln. Dann wird die Sollwertführung 65 in der obengenannten Weise jeweils gestoppt.

Es findet zudem auch eine Mitteldruckandrosselung 58 statt, die ebenfalls über einen Schalter 56 ein- und ausschaltbar ist. Auch dort erfolgt die Berechnung des Druckes über eine Bewertungsschaltung 59 unter Verwendung der modifizierten Gleitdruckkennlinie 9. Allerdings liegt am Eingang der Mitteldruckdurchfluß-Istwert 20 und am Ausgang das Ergebnis der Block-Drucksollwertführung 44 für den Mitteldruckteil an. Auch für den Mitteldruckteil ist eine Erkennungsschaltung 47 vorgesehen, die analog der obengenannten Hochdruck-Erkennungsschaltung 46 funktioniert. Dort liegt am Eingang der Mitteldruck-Istwert 19 an.

**Patentansprüche**

1. Verfahren zur Primärregelung mit einer kombinierten Gas-und Dampfturbinenanlage im Netzbetrieb, mit einem Gasturbinenteil (2) und einem Dampfteil (3) mit zumindest einer Druckstufe, deren Arbeitsdampf durch einen oder mehrere mit der Abwärme des Gasturbinenteils (2) gespeisten Abhitzekessel (4,5) erzeugt wird und dessen Stellventil-Durchlaßquerschnitt durch eine Regelung eingestellt wird, deren Sollwertführung über einen leistungsrelevanten Regelparameter der Druckstufe erfolgt, **dadurch gekennzeichnet, daß** die Druckstufe mit einem derart angedrosselten Stellventil (6, 7,8) gefahren wird, daß eine Frequenzstützungs-Leistungsreserve aufgebaut wird, welche bei Unterfrequenz dadurch zur Frequenzstützung genutzt wird, daß nach Maßgabe der Frequenzunterschreitung eine Sollwertkorrektur gebildet wird, die einem gegenüber dem angedrosselten Zustand des Stellventils (6, 7,8) erhöhten Durchlaßquerschnitt entspricht und die mit einem aufgeprägten, zeitlichen Verschwindsignal auf den Durchlaßquerschnitt des Stellventils (6, 7,8) einwirkt, wobei das zeitliche Verschwindsignal derart bemessen ist, daß unter Berücksichtigung des Antwortverhaltens der Gas- und Dampfturbinenanlage auf den erhöhten Durchlaßquerschnitt trotz Sollwertkorrektur ein stabiler Betriebszustand gewahrt bleibt.

2. Verfahren nach Anspruch 1, **dadurch gekennzeichnet, daß** der leistungsrelevante Regelparameter der im Bereich des Stellventils (6, 7,8) herrschende Vordruck ist, welcher ermittelt wird durch Messung des Dampfdurchsatzes und Umrechnung mit Hilfe einer für die Druckstufe charakteristischen, modifizierten Gleitdruckkennlinie, die einem angedrosselten Stellventil (6, 7,8) entspricht.

3. Verfahren nach Anspruch 1 oder 2, **dadurch gekennzeichnet, daß** das zeitliche Verschwindsignal ein Rechtecksignal oder ein mit einer Zeitkonstante abklingendes Abklingsignal ist, wobei die Zeitkonstante und/oder die Signalform des Abklingsignals ein Modell der kombinierten Gas- und Dampfturbinenanlage (1) ist.

4. Verfahren nach Anspruch 3, **dadurch gekennzeichnet, daß** das zeitliche Verschwindsignal einer $D\text{-}T_n$ - Modellfunktion der kombinierten Gas- und Dampfturbinenanlage (1) entspricht.

5. Verfahren nach Anspruch 3 oder 4, **dadurch gekennzeichnet, daß** die Zeitkonstante oder die Länge des oben genannten Rechtecksignales zwischen 10 und 200 Sekunden beträgt.

6. Verfahren nach einem der Ansprüche 1 bis 5, **dadurch gekennzeichnet, daß** eine Blockleistungsführung der kombinierten Gas- und Dampfturbinenanlage (1) erfolgt und daß die Sollwertkorrektur, insbesondere mit aufgeprägtem, zeitlichen Verschwindsignal, zusätzlich in einer Stoppschaltung (48) der Blockleistungsführung verarbeitet wird, die eine Korrektur der Blockleistung stoppt, die der Leistungsänderung der Druckstufe/des Dampfturbinenteils aufgrund der Sollwertkorrektur, insbesondere mit aufgeprägtem, zeitlichen Verschwindsignal, entgegenwirkt.

7. Verfahren nach einem der Ansprüche 1 bis 6, **dadurch gekennzeichnet, daß** eine Bestimmung des Druckverlaufs und des Massenstromverlaufs in der Druckstufe erfolgt und bei Gegenläufigkeit der vorgenannten Größen die jeweils der Tendenz des Regelparameters entgegenwirkende Richtung der Sollwertänderung gestoppt wird.

FIG 1

FIG 2

**Europäisches Patentamt**

**EUROPÄISCHER RECHERCHENBERICHT**

Nummer der Anmeldung

EP 00 11 5684

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| A | EP 0 976 914 A (ASEA BROWN BOVERI) 2. Februar 2000 (2000-02-02) * Spalte 5, Zeile 26 - Zeile 38 * ----- | 1 | F01K23/10 |

**RECHERCHIERTE SACHGEBIETE (Int.Cl.7)**

F01K

Der vorliegende Recherchenbericht wurde für alle Patentansprüche erstellt

| Recherchenort | Abschlußdatum der Recherche | Prüfer |
|---|---|---|
| DEN HAAG | 4. Januar 2001 | Van Gheel, J |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
 
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 00 11 5684

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

04-01-2001

| Im Recherchenbericht angeführtes Patentdokument | Datum der Veröffentlichung | Mitglied(er) der Patentfamilie | Datum der Veröffentlichung |
|---|---|---|---|
| EP 0976914 A | 02-02-2000 | KEINE | |

EPO FORM P0461

Für nähere Einzelheiten zu diesem Anhang : siehe Amtsblatt des Europäischen Patentamts, Nr.12/82